# EUROPEAN PATENT SPECIFICATION

(11) **EP 2 706 303 B1**
(45) Date of publication and mention of the grant of the patent: **06.03.2019**
(21) Application number: 13183201.6
(22) Date of filing: 05.09.2013
(51) Int. Cl.: F24D 19/10, F28F 19/00, G05D 23/00, F28F 27/00

(54) **Heat pump system**
Wärmepumpensystem
Système de pompe à chaleur

(30) Priority: 07.09.2012 JP 2012197284
(43) Date of publication of application: 12.03.2014
(73) Proprietor: MITSUBISHI HEAVY INDUSTRIES THERMAL SYSTEMS, LTD., Tokyo 108-8215 (JP)
(72) Inventor: Maeno, Masashi, TOKYO, 108-8215 (JP); Omura, Minemasa, TOKYO, 108-8215 (JP); Yoshida, Shigeru, TOKYO, 108-8215 (JP)
(74) Representative: Intès, Didier Gérard André

(56) References cited:
- WO-A1-2012/046461
- DE-A1-102008 024 771
- JP-A- 2004 144 445
- JP-A- 2009 150 609
- JP-A- 2010 091 181
- US-A1- 2003 061 827

## Description

### {Technical Field}

The present invention relates to a type of heat pump system which includes a water/refrigerant heat exchanger and controls water volume by rotational speed of a water pump such that a hot water delivery temperature meets a target temperature.

### {Background Art}

In a heat pump system which includes a water/refrigerant heat exchanger and is applied to a water heater, which delivers hot water, a chiller, or the like, depending on the water quality, scale is built up on a water passage side of the water/refrigerant heat exchanger, which can lead to degradation of the heat exchanging performance. In some cases, this causes results in the system such as a capacity deficiency, a higher power consumption, or a shutdown by protective control. In particular, in a type of system which controls a water volume by rotational speed of a water pump such that a temperature of delivered hot water meets a target temperature set by a remote controller, etc., the temperature of delivered hot water is retained even when the heat exchanging performance has degraded. Thus, there has been a difficulty in recognizing performance degradation due to scale build-up.

To make an improvement in this situation, for example, Patent Literature 1 (PTL 1) discloses a system which allows determination of scale build-up without using an expensive flow meter. The system proposed in this literature detects a refrigerant inlet temperature, a refrigerant outlet temperature, a water inlet temperature, a water outlet temperature, etc. of a water/refrigerant heat exchanger, and calculates a temperature efficiency ratio on a high-temperature side of the heat exchanger by dividing a value obtained by subtracting the refrigerant outlet temperature from the refrigerant inlet temperature by a value obtained by subtracting the water inlet temperature from the refrigerant inlet temperature. And when the temperature efficiency ratio decreases to a value equal to or lower than a preset value, it is determined that scale has been built up in the water/refrigerant heat exchanger and the water/refrigerant heat exchanger is in an abnormal condition.

### {Citation List}

### {Patent Literature}

{PTL 1}
Japanese Unexamined Patent Application, Publication No. 2010-91181

### {Summary of Invention}

### {Technical Problem}

However, in the system disclosed in Patent Literature 1, temperatures of at least three positions of the water/refrigerant heat exchanger including the refrigerant inlet temperature, the refrigerant outlet temperature, and the water inlet temperature need to be detected. Besides, it is necessary to calculate a value of the refrigerant inlet temperature minus the refrigerant outlet temperature, a value of the refrigerant inlet temperature minus the water inlet temperature, and the ratio of the values, based on the detection values of respective temperature sensors. This has led to a need for a heat pump system which can determine, with ease and accuracy, degradation of heat exchanging performance due to scale build-up on the water passage side of the water/refrigerant heat exchanger on the basis of detection values of a smaller number of temperature sensors.

The present invention has been made in view of these circumstances and is based on a finding that when the hot water delivery temperature is taken as a parameter, a temperature difference between the refrigerant outlet temperature and the water inlet temperature of the water/refrigerant heat exchanger increases as the capacity decreases due to scale build-up. Focusing on this point, the present invention has an object to provide a heat pump system which can easily and accurately determine degradation of heat exchanging performance due to scale build-up on the water passage side of the water/refrigerant heat exchanger on the basis of detection values of a smaller number of temperature sensors.

### {Solution to Problem}

In order to achieve the above object, the heat pump system of the present invention has adopted the following solutions.

According to a first aspect of the present invention, a heat pump system according to claim 1 is provided.

According to the first aspect of the present invention, the heat pump system is provided with the performance degradation determining part which determines performance degradation due to scale build-up of the water/refrigerant heat exchanger on the basis of the temperature of the delivered hot water and the temperature difference between the refrigerant outlet temperature and the water inlet temperature of the water/refrigerant heat exchanger. Thus, when scale has built up in the water passage of the water/refrigerant heat exchanger and degraded its heat exchanging performance, the performance degradation determining part can determine whether or not the performance degradation of the water/refrigerant heat exchanger exceeds a limit value, on the basis of a preset temperature of the delivered hot water and an obtained value of the temperature difference between the refrigerant outlet temperature and the water inlet temperature of the water/refrigerant heat exchanger, i.e., "the refrigerant outlet temperature - the water inlet temperature" of the water/refrigerant heat exchanger. In particular, in the system which controls the water volume such that the temperature of the delivered hot water meets a target temperature, the temperature of the delivered hot water is retained even when the performance of the water/refrigerant heat exchanger has degraded, which makes it difficult to determine performance degradation of the heat exchanger. However, according to the first aspect of the present invention, performance degradation of the water/refrigerant heat exchanger can be determined on the basis of the temperature difference and the temperature of the delivered hot water by detecting the refrigerant outlet temperature and the water inlet temperature of the water/refrigerant heat exchanger and obtaining the difference between these temperatures. Thus, whether or not the water/refrigerant heat exchanger has degraded in performance due to scale build-up can be easily and accurately determined, without using complicated logarithmic mean temperature difference or arithmetic mean temperature difference, but by detecting temperatures of only two positions, that is, the refrigerant outlet temperature and the water inlet temperature of the water/refrigerant heat exchanger.

According to a second aspect of the present invention, in the above-described heat pump system, the performance degradation determining part has an alarm part which outputs a maintenance alarm when a capacity ratio of the water/refrigerant heat exchanger exceeds a limit range.

According to the second aspect of the present invention, in the heat pump system, the performance degradation determining part has the alarm part which outputs the maintenance alarm when the capacity ratio of the water/refrigerant heat exchanger exceeds the limit range. Thus, the maintenance alarm output from the alarm part allows a user to recognize that scale has built up in the water/refrigerant heat exchanger and degraded its performance. Accordingly, by appropriately deciding the timing of maintenance for the water/refrigerant heat exchanger and performing cleaning or replacement work, etc., the user can stably operate the heat pump system while avoiding a capacity deficiency, a higher power consumption, shutdown by protective control, and the like.

According to a third aspect of the present invention, in either of the aforementioned heat pump systems, the performance degradation determining part stores a table for defining a criterion for a performance degradation lower limit, with respect to each hot water delivery temperature, on the bases of a relationship between the temperature of the delivered hot water and the temperature difference between the refrigerant outlet temperature and the water inlet temperature at the time when performance degradation of the water/refrigerant heat exchanger occurs.

According to the heat pump system of the third aspect of the present invention, the performance degradation determining part comprises the table for defining the criterion for the performance degradation lower limit, with respect to each hot water delivery temperature, from the relationship between the temperature of the delivered hot water and the temperature difference between the refrigerant outlet temperature and the water inlet temperature at the time when performance degradation of the water/refrigerant heat exchanger occurs. Thus, in accordance with the criteria defined by the table, performance degradation due to scale build-up in the water passage of the water/refrigerant heat exchanger can be easily determined on the basis of the temperature of the delivered hot water and the temperature difference between the refrigerant outlet temperature and the water inlet temperature of the water/refrigerant heat exchanger which are detected during operation. This makes it possible to provide at low cost the heat pump system including the performance degradation determining part which can easily and accurately determine performance degradation of the water/refrigerant heat exchanger.

According to a fourth aspect of the present invention, in any one of the aforementioned heat pump systems, the heat pump system is a heat pump system for a water heater which uses a CO2 refrigerant.

According to the present invention, the heat pump system is the heat pump system for the water heater which uses the CO2 refrigerant. This makes it possible, in the heat pump system for the water heater which uses the CO2 refrigerant, to appropriately determine performance degradation due to scale build-up in the water passage of the water/refrigerant heat exchanger serving as a gas cooler, and maintain the water/refrigerant heat exchanger. Thus, it is possible to stably operate the heat pump system for the water heater while maintaining its capacity and performance.

### {Advantageous Effects of Invention}

According to the present invention, when scale has been built up in the water passage of the water/refrigerant heat exchanger and degraded its heat exchanging performance, the performance degradation determining part can determine whether or not the performance degradation of the water/refrigerant heat exchanger has exceeded the limit value, on the basis of the preset temperature of the delivered hot water and the value of the temperature difference between the refrigerant outlet temperature and the water inlet temperature of the water/refrigerant heat exchanger, i.e., "the refrigerant outlet temperature - the water inlet temperature" of the water/refrigerant heat exchanger. In particular, in the system which controls the water volume such that the temperature of the delivered hot water meets a target temperature, the temperature of the delivered hot water is retained even when the performance of the water/refrigerant heat exchanger has degraded, which makes it difficult to determine performance degradation of the heat exchanger. However, according to the present invention, performance degradation of the water/refrigerant heat exchanger can be determined on the basis of the temperature difference and the temperature of the delivered hot water by detecting the refrigerant outlet temperature and the water inlet temperature of the water/refrigerant heat exchanger and obtaining the difference between these temperatures. Thus, performance degradation due to scale build-up of the water/refrigerant heat exchanger can be easily and accurately determined without using complicated logarithmic mean temperature difference or arithmetic mean temperature difference, but by detecting temperatures of only two positions, that is, the refrigerant outlet temperature and the water inlet temperature of the water/refrigerant heat exchanger.

### {Brief Description of Drawings}

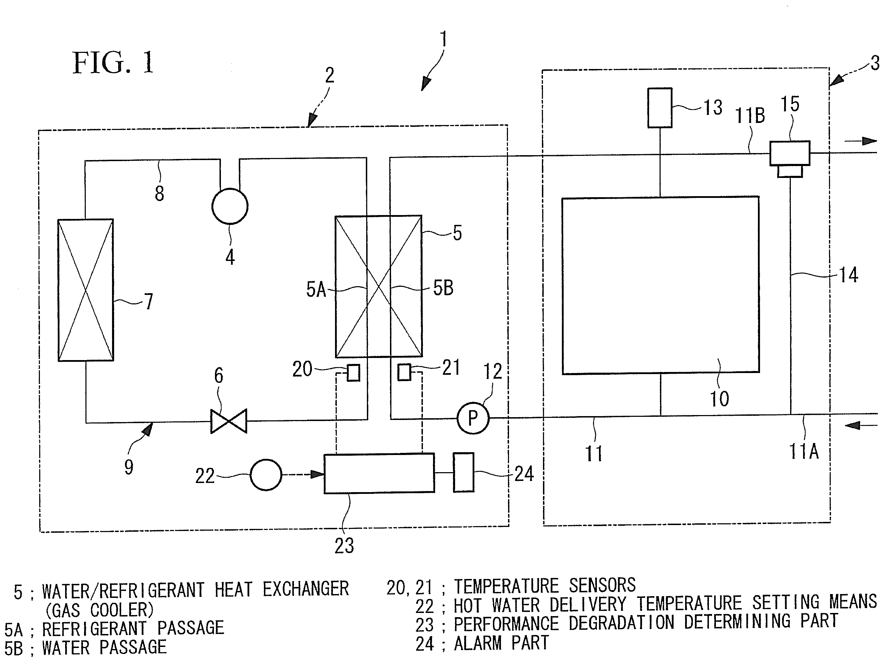

{Fig. 1}
   Fig. 1 is a configuration diagram of a heat pump system according to an embodiment of the present invention.
{Fig. 2}
   Fig. 2 is a flowchart for determining performance degradation of a water/refrigerant heat exchanger by a performance degradation determining part of the heat pump system.
{Fig. 3}
   Fig. 3 is a schematic diagram showing a state of heat exchange between a refrigerant and water in the water/refrigerant heat exchanger.
{Fig. 4}
   Fig. 4 is an explanatory chart which shows a state of heat exchange with water on a P-h diagram of a heat pump system using a CO2 refrigerant.
{Fig. 5}
   Fig. 5 is one example of a table which determines performance degradation during scale build-up (in a case based on a capacity ratio of 85%) from a relationship between hot water delivery temperature and "a refrigerant outlet temperature - a water inlet temperature".
{Fig. 6}
   Fig. 6 is a list showing the hot water delivery temperatures and the temperature differences of "the refrigerant outlet temperature - the water inlet temperature" (determination criteria) in a case of the capacity ratio of 85%.
{Fig. 7}
   Figs. 7(A) and 7(B) are graphs showing relationships between the capacity ratio and "the refrigerant outlet temperature - the water inlet temperature" and between the capacity ratio and a logarithmic mean temperature difference, respectively, in a case of the hot water delivery temperature of 80°C.

### {Description of Embodiments}

Hereinafter, one embodiment of the present invention will be described with reference to Figs. 1 to 7.

Fig. 1 is a configuration diagram of a heat pump system according to an embodiment of the present invention.

A heat pump system 1 of the present embodiment is applied to a water heater, and includes a supercritical-cycle heat pump 2 which uses a CO2 refrigerant, and a hot water storage tank unit 3 which is provided with a hot water storage tank 10 for storing hot water produced by the heat pump 2.

The heat pump 2 includes a closed-cycle refrigerant circulation circuit 9 which has the following sequentially connected by a refrigerant pipe 8: a compressor 4 which compresses a refrigerant; a water/refrigerant heat exchanger (gas cooler) 5 which serves as a gas cooler and exchanges heat between the refrigerant and water; a pressure reduction means 6 being an electronic expansion valve, etc. which reduces pressure of the refrigerant; and an evaporator 7 which evaporates the refrigerant by heat exchange with outside air. The heat pump 2 is the supercritical-cycle heat pump filled with the CO2 refrigerant as a working medium, and the heat pump itself may be a known one.

The hot water storage tank unit 3 essentially includes the following: the hot water storage tank 10 having a required capacity for storing the hot water produced at the heat pump 2 side; a water circulation circuit 11 through which the water can circulate to the water/refrigerant heat exchanger 5 of the heat pump 2 via the hot water storage tank 10; a water pump 12 provided in the water circulation circuit 11; an air vent 13 which functions, when air is included in the water circulation circuit 11, to discharge the air to the outside by operation of the water pump 12; a bypass circuit 14 provided between a water supply-side pipe 11A and a hot water delivery-side pipe 11B of the water circulation circuit 11; a thermostatic mixing valve 15 which blends the water from the bypass circuit 14 with hot supply water from the hot water storage tank 10 to produce the hot water having a predetermined temperature and supplies it to a load side; and the like.

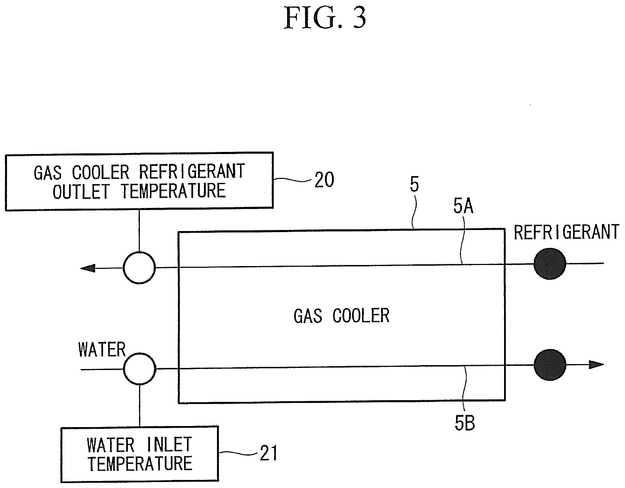

The water/refrigerant heat exchanger (gas cooler) 5 of the heat pump 2 is a heat exchanger which exchanges heat between the refrigerant flowing in a refrigerant passage 5A connected to the refrigerant pipe 8 and the water flowing in a water passage 5B connected to the water circulation circuit 11, and functions to heat the water using heat from the refrigerant and thereby produce the hot water. The water/refrigerant heat exchanger 5 is configured so that a flow direction of the refrigerant flowing in the refrigerant passage 5A and a flow direction of the water flowing in the water passage 5B are opposite to each other. Fig 3 schematizes this configuration. As illustrated, the refrigerant flows from the right side to the left side of the figure, while the water flows from the left side to the right side of the figure.

This heat pump system 1 adopts a system in which the water volume is controlled through control of the rotational speed of the water pump 12 such that temperature of the hot water delivered from the water/refrigerant heat exchanger 5 (hereinafter referred to as "hot water delivery temperature") meets a temperature (target temperature) which the user sets with a remote controller, etc. On the other hand, city water (tap water) is commonly circulated in the water passage 5B of the above-described water/refrigerant heat exchanger (gas cooler) 5. Depending on the water quality, scale is built up in the water passage 5B in the course of a long-term operation, which may degrade the heat exchanging performance and make the initial capacity unavailable. Therefore, the present embodiment employs the following configuration in order to determine degradation of the heat exchanging performance (capacity) due to scale build-up in the water passage 5B of the water/refrigerant heat exchanger 5.

The water/refrigerant heat exchanger 5 is provided with a temperature sensor 20 for detecting the refrigerant outlet temperature at a refrigerant outlet side thereof, and provided with a temperature sensor 21 for detecting the water inlet temperature at the water inlet side thereof. Also, a performance degradation determining part 23 is provided, which determines degradation of the heat exchanging performance (capacity) due to scale build-up of the water/refrigerant heat exchanger 5, on the basis of a temperature difference of the refrigerant outlet temperature and the water inlet temperature, i.e., "the refrigerant outlet temperature - the water inlet temperature", of the water/refrigerant heat exchanger 5, which is obtained from detected values of the temperature sensors 20 and 21, and the hot water delivery temperature (temperature of the hot water delivered from the water/refrigerant heat exchanger 5) which is set by the user through a setting means 22 such as a remote controller.

The performance degradation determining part 23 includes an alarm part 24 which, when it is determined that a capacity ratio (ratio of the capacity degradation to the initial capacity) of the water/refrigerant heat exchanger 5 has fallen below the limit value, outputs a maintenance alarm which allows the user to recognize the degradation state and prompts the user to perform maintenance work such as cleaning and replacement of the water/refrigerant heat exchanger 5.

The following description explains in detail why the performance (capacity) degradation due to scale build-up of the water/refrigerant heat exchanger 5 can be determined on the basis of the hot water delivery temperature and "the refrigerant outlet temperature - the water inlet temperature" (temperature difference) of the water/refrigerant heat exchanger 5.

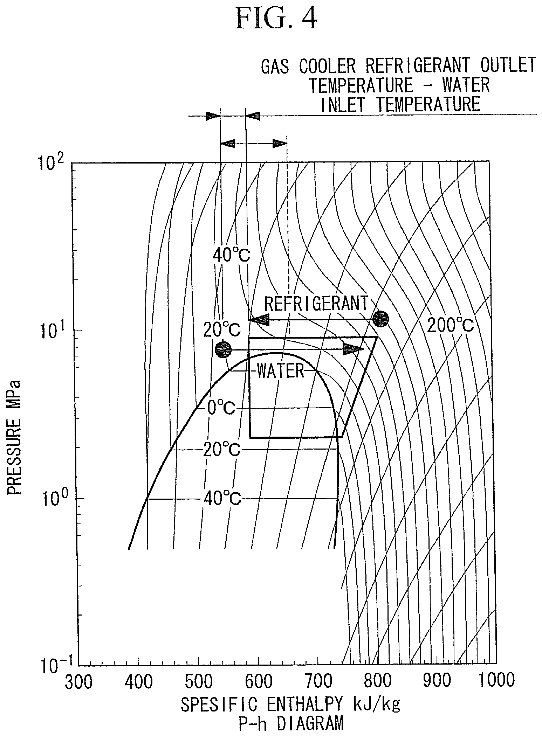

Fig. 4 is an explanatory chart which shows a state of heat exchange with the water on a P-h diagram of the heat pump 2 using the CO2 refrigerant. When heat is exchanged between the refrigerant and the water in the water/refrigerant heat exchanger (gas cooler) 5 as shown in Fig. 3, the temperature of the refrigerant in Fig. 4, which is originally in a state of having been discharged from the compressor 4 (black dot), changes from the right side to the left side by heat exchange with the water. On the other hand, the temperature of the water, which exchanges heat with the refrigerant, is originally at the inlet temperature of the water/refrigerant heat exchanger 5 (e.g., 20°C (black dot)), and changes from the left side to the right side as the temperature rises. In this case, since scale build-up in the water/refrigerant heat exchanger 5 prevents heat from being sufficiently exchanged, the refrigerant outlet temperature increases (toward the position of the broken line), and the temperature difference between the refrigerant outlet temperature and the water inlet temperature "the refrigerant outlet temperature - the water inlet temperature" becomes large.

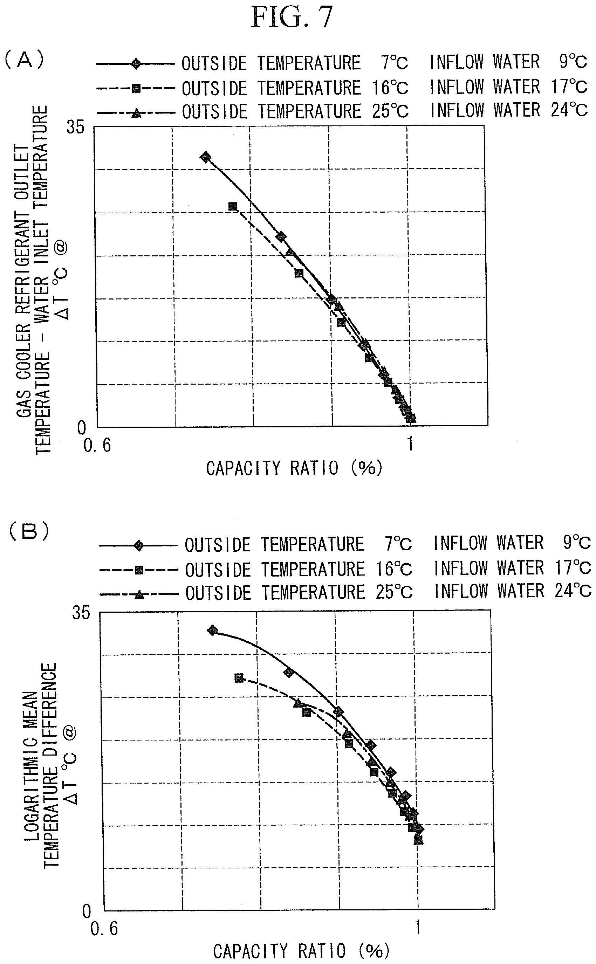

As shown in Fig. 7(A), the inventors found that, regardless of changes in the outside air temperature or the water inlet temperature (inflow water temperature), the relationship between the temperature difference "the refrigerant outlet temperature - the water inlet temperature" and the capacity ratio of the water/refrigerant heat exchanger 5 can be represented by a substantially constant approximation straight line. While this Fig. 7(A) shows a case where the hot water delivery temperature is 80°C, a similar approximation straight line can be obtained for each hot water delivery temperature.

Fig. 7(B) shows a relationship between the capacity ratio of the water/refrigerator heat exchanger 5 and the logarithmic mean temperature difference (=(ΔΘ1-ΔΘ2)/ln(ΔΘ1/ΔΘ2), where ΔΘ1=(the refrigerant inlet temperature - the hot water delivery temperature) and ΔΘ2=(the refrigerant outlet temperature - the water inlet temperature)) which is obtained from detected values of the refrigerant inlet temperature, the refrigerant outlet temperature, the water inlet temperature, and the hot water delivery temperature of the water/refrigerant heat exchanger 5. Almost the same trend as in Fig. 7(A) has been confirmed.

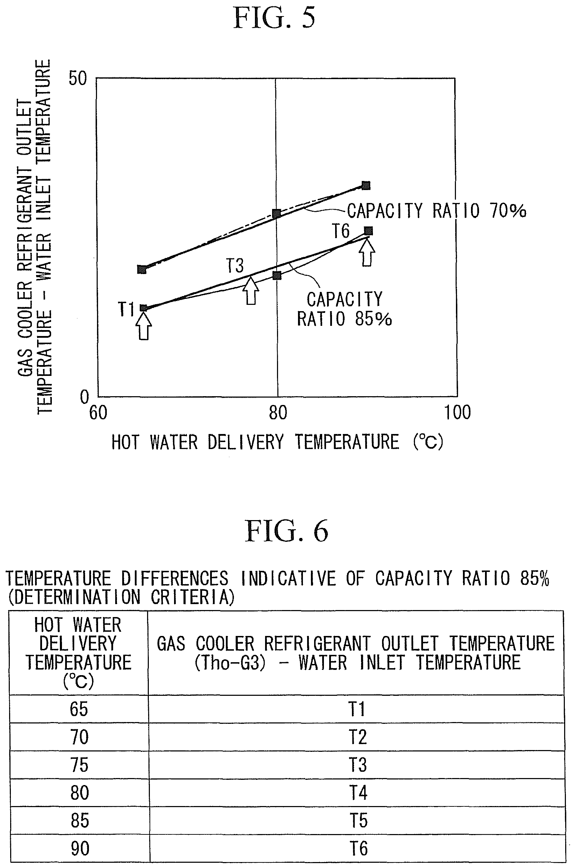

With the hot water delivery temperature serving as a parameter, the above-described relationship between the temperature difference "the refrigerant outlet temperature - the water inlet temperature" and the capacity ratio is organized in a table, as shown in Fig. 5, of a criterion for each hot water delivery temperature, which defines a limit range of the performance degradation. Fig. 5 shows approximation straight lines in cases of the capacity ratio of 85% and 70%. Further, the list of Fig. 6 shows the hot water delivery temperatures and the temperature differences of "the refrigerant outlet temperature - the water inlet temperature" (determination criteria) in a case where the capacity ratio of 85% is taken as the criterion.

According to these Figs. 5 and 6, in the case where the capacity ratio of 85% is taken as the criterion for determining scale build-up, when the hot water delivery temperature is 65°C, T1 of the above-described temperature difference indicates that the heat exchanging performance (capacity) has degraded due to scale build-up to 85% of the initial capacity; when the hot water delivery temperature is 75°C, T3 of the temperature difference indicates that the capacity ratio has degraded to 85%; and when the hot water delivery temperature is 90°C, T6 of the temperature difference indicates that the capacity ratio has degraded to 85%.

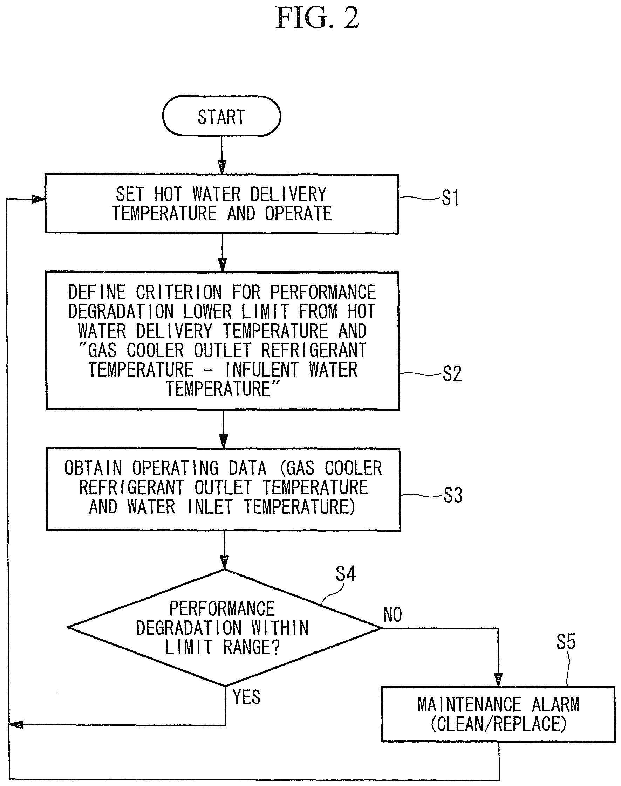

The performance degradation determining part 23 stores the table of the criterion for each hot water delivery temperature which defines the limit range of performance degradation shown in Fig. 5, and is configured to determine scale build-up in accordance with the determination flowchart shown in Fig. 2. During operation of the heat pump system 1, the user sets "the hot water delivery temperature" with the setting means 22 such as a remote controller (Step 1). With this hot water delivery temperature set as a target temperature, the heat pump system 1 operates while controlling the rotational speed of the water pump 12 at a constant capacity and controlling the water volume such that the hot water delivery temperature from the water/refrigerant heat exchanger (gas cooler) 5 meets the target temperature.

After the hot water delivery temperature has been set in Step S1, the flow proceeds to Step S2, where the criterion for the performance degradation lower limit is defined from the relationship between the hot water delivery temperature and "the refrigerant outlet temperature - the water inlet temperature" of the water/refrigerant heat exchanger 5, and then the flow proceeds to Step S3. In Step S3, the refrigerant outlet temperature and the water inlet temperature of the water/refrigerant heat exchanger (gas cooler) 5 as operating data are read as the detection values of the temperature sensors 20 and 21. Then, the above-described temperature difference is calculated from these detection values, and in Step S4, it is determined whether or not the value of the temperature difference is within the limit range of the criterion defined in Step S2.

When the value of the temperature difference is determined to be within the limit range of the criterion (YES) in Step 4, the flow returns to Step 1 and the same operation is repeated. However, if the value has exceeded the limit range of the criterion and the determination is "NO", the flow proceeds to Step S5 and the alarm part 24 is commanded to output the maintenance alarm which allows the user to recognize that an amount of scale equal to or more than a limit amount has built up in the water passage 5B of the water/refrigerant heat exchanger (gas cooler) 5 and the heat exchanging performance (capacity) has degraded beyond the limit value. The user receiving this alarm can resume stable operation of the heat pump system 1 by cleaning or replacing the water/refrigerant heat exchanger (gas cooler) 5 at an appropriate timing to recover its performance.

Thus, according to the present invention, the following effects can be obtained.

In the above-described heat pump system 1, when the supercritical-cycle heat pump 2 using the CO2 refrigerant is operated, the high-temperature, high-pressure refrigerant gas having been compressed in the compressor 4 is introduced into the water/refrigerant heat exchanger 5 through the refrigerant circulation circuit 9. In the water/refrigerant heat exchanger 5, through heat exchange between the refrigerant flowing on the refrigerant passage 5A and the water circulated to the water passage 5B through the water circulation circuit 11, the water is heated and increased in temperature by heat from the high-temperature, high-pressure refrigerant gas, and thereby the hot water (warm water) having a temperature set by the setting means 22 such as a remote controller is produced.

This hot water is delivered to the hot water storage tank 10 through the water circulation circuit 11 and stored in the hot water storage tank 10. Meanwhile, the refrigerant which has been cooled by exchanging heat in the water/refrigerant heat exchanger 5 is reduced in pressure by the pressure reduction means 6 and thereafter introduced into the evaporator 7 as a low-pressure, low-temperature gas-liquid two phase refrigerant. In the evaporator, the refrigerant is evaporated through heat exchange with the outside air blown by a fan, etc., and sucked into the compressor 4 to be recompressed. By repeating the same action, the refrigerant serves to the production of the hot water.

The hot water stored in the hot water storage tank 10 is consumed by being delivered when required from the hot water storage tank 10 through the hot water delivery-side pipe 11B to the load side. During this time, the water of around 20°C, which is supplied from the water supply-side pipe 11A through the bypass circuit 14 to the mixing valve 15, and the high-temperature hot water of around 90°C, which has been stored in the hot water storage tank 10, are blended in the mixing valve 15 to make the hot water of around 60°C to be supplied to the load side.

In the above-described hot water production process, the water is circulated to the water passage 5B of the water/refrigerant heat exchanger 5. Depending on the water quality, scale built up in the water passage 5B, and as heat exchange is hindered by accumulation of the scale, degradation of heat exchanging performance (capacity) occurs. This results in a capacity deficiency, a higher power consumption, or shutdown by protective control of the system.

However, the present embodiment includes the performance degradation determining part 23 which determines the performance degradation due to scale build-up in the water/refrigerant heat exchanger (gas cooler) 5 on the basis of the hot water delivery temperature and the temperature difference between the refrigerant outlet temperature and the water inlet temperature (the refrigerant outlet temperature - the water inlet temperature) of the water/refrigerant heat exchanger 5. Thus, when scale has been built up in the water passage 5B of the water/refrigerant heat exchanger 5 and degraded the heat exchanging performance, it is possible to determine, through the performance degradation determining part 23, whether or not the performance degradation of the water/refrigerant heat exchanger 5 has exceeded the limit value, on the basis of the preset hot water delivery temperature and the value of the temperature difference between the refrigerant outlet temperature and the water inlet temperature of the water/refrigerant heat exchanger 5, i.e., "the refrigerant outlet temperature - the water inlet temperature" of the water/refrigerant heat exchanger 5.

In particular, in the heat pump system 1 which controls the water volume such that the hot water delivery temperature meets the target temperature, the hot water delivery temperature is retained even when the performance of the water/refrigerant heat exchanger 5 has degraded, which makes it difficult to determine performance degradation of the water/refrigerant heat exchanger 5. However, according to the present invention, performance degradation of the water/refrigerant heat exchanger 5 can be determined on the basis of the temperature difference and the hot water delivery temperature by detecting the refrigerant outlet temperature and the water inlet temperature of the water/refrigerant heat exchanger 5 and obtaining the difference between these temperatures. Thus, whether or not the water/refrigerant heat exchanger 5 has degraded in performance due to scale build-up can be easily and accurately determined without using complicated logarithmic mean temperature difference or arithmetic mean temperature difference, but by detecting temperatures of only two positions, that is, the refrigerant outlet temperature and the water inlet temperature of the water/refrigerant heat exchanger 5.

Further, the performance degradation determining part 23 includes the alarm part 24 which outputs the maintenance alarm when the capacity ratio of the water/refrigerant heat exchanger 5 exceeds the limit range. Thus, the maintenance alarm output from the alarm part 24 allows the user to recognize that scale has been built up in the water/refrigerant heat exchanger 5 and degraded the performance beyond the limit value. Accordingly, by appropriately deciding the timing of maintenance for the water/refrigerant heat exchanger 5 and performing cleaning or replacement work, etc., the user can stably operate the heat pump system 1 while avoiding a capacity deficiency, a higher power consumption, shutdown by protective control, and the like.

In addition, the performance degradation determining part 23 stores the table which defines the criterion for the performance degradation lower limit, with respect to each hot water delivery temperature, in connection with the relationship between the hot water delivery temperature and the temperature difference of "the refrigerant outlet temperature - the water inlet temperature" where performance degradation of the water/refrigerant heat exchanger 5 occurs. Thus, in accordance with the criterion defined by the table, performance degradation due to scale build-up in the water passage 5B of the water/refrigerant heat exchanger 5 can be easily determined, on the basis of the hot water delivery temperature and the temperature difference between the refrigerant outlet temperature and the water inlet temperature of the water/refrigerant heat exchanger 5 which are detected during operation. This makes it possible to provide at low cost the heat pump system 1 including the performance degradation determining part 23 which can easily and accurately determine performance degradation of the water/refrigerant heat exchanger 5.

Moreover, the heat pump system 1 of the present embodiment is the heat pump system 1 for the water heater which uses the CO2 refrigerant. Thus, it is possible, in the heat pump system 1 for the water heater which uses the CO2 refrigerant, to appropriately determine performance degradation due to scale build-up in the water passage 5B of the water/refrigerant heat exchanger 5 serving as a gas cooler, and maintain the water/refrigerant heat exchanger. This makes it possible to stably operate the heat pump system 1 for the water heater while maintaining its capacity and performance.

The present invention is not limited to the above-described embodiment, and modifications can be made as appropriate within the scope of the present invention. For example, while the heat pump system 1 for the water heater has been described in the above embodiment, the present invention can of course be applied to a heat pump chiller as well. Additionally, when the CO2 refrigerant is used, a two-stage compressor is preferably adopted as the above-described compressor 4, which is expected to further enhance the capacity.

### {Reference Signs List}

- 1: Heat pump system
- 2: Heat pump
- 3: Hot water storage tank unit
- 4: Compressor
- 5: Water/refrigerant heat exchanger (gas cooler)
- 5A: Refrigerant passage
- 5B: Water passage
- 6: Pressure reduction means
- 7: Evaporator
- 10: Hot water storage tank
- 11: Water circulation circuit
- 12: Water pump
- 20, 21: Temperature sensor
- 22: Setting means for hot water delivery temperature
- 23: Performance degradation determining part
- 24: Alarm part

## Claims

1. A heat pump system (1) comprising a water/refrigerant heat exchanger (5); and a performance degradation determining part (23) for configured to determine whether the water/refrigerant heat exchanger has degraded in performance due to scale build-up, and which controls a water volume by means of a water pump (12) such that a temperature of hot water delivered from the heat pump system (1) meets a target temperature, the heat pump system (1) **characterized in that**,
the performance degradation determining part (23) is configured to determine performance degradation due to scale build-up in the water/refrigerant heat exchanger (5) on the basis of the preset temperature of the delivered hot water and a temperature difference between a refrigerant outlet temperature and a water inlet temperature of the water/refrigerant heat exchanger (5).

2. The heat pump system (1) according to claim 1, wherein
the performance degradation determining part (23) has an alarm part (24) which outputs a maintenance alarm when a capacity ratio of the water/refrigerant heat exchanger (5) exceeds a limit range.

3. The heat pump system (1) according to claim 1 or 2, wherein
the performance degradation determining part (23) stores a table for defining a criterion for performance degradation lower limit, with respect to each hot water delivery temperature, on the bases of a relationship between the temperature of the delivered hot water and the temperature difference between the refrigerant outlet temperature and the water inlet temperature at the time when performance degradation of the water/refrigerant heat exchanger (12) occurs.

4. The heat pump system (1) according to any one of claims 1 to 3, wherein
the heat pump system (1) is a heat pump system for a water heater (3) which uses a CO2 refrigerant.

## Patentansprüche

1. Wärmepumpensystem (1), umfassend einen Wasser-Kältemittel-Wärmetauscher (5); und einen Leistungsabfall-Bestimmungsabschnitt (23), der konfiguriert ist zum Bestimmen, ob die Leistung des Wasser-Kältemittel-Wärmetauschers aufgrund von Kesselsteinablagerungen abgefallen ist, und der ein Wasservolumen mithilfe einer Wasserpumpe (12) so steuert, dass eine Temperatur von vom Wärmepumpensystem (1) ausgegebenem Heißwasser einer Zieltemperatur entspricht, wobei das Wärmepumpensystem (1) **dadurch gekennzeichnet ist, dass**
der Leistungsabfall-Bestimmungsabschnitt (23) konfiguriert ist zum Bestimmen, anhand der im Voraus bestimmten Temperatur des ausgegebenen Heißwassers und einer Temperaturdifferenz zwischen einer Kältemittelauslasstemperatur und einer Wassereinlasstemperatur des Wasser-Kältemittel-Wärmetauschers (5), eines Leistungsabfalls aufgrund von Kesselsteinablagerungen im Wasser-Kältemittel-Wärmetauscher (5).

2. Wärmepumpensystem (1) nach Anspruch 1, wobei
der Leistungsabfall-Bestimmungsabschnitt (23) einen Alarmabschnitt (24) umfasst, der einen Wartungsalarm ausgibt, wenn ein Kapazitätsverhältnis des Wasser-Kältemittel-Wärmetauschers (5) einen Grenzbereich überschreitet.

3. Wärmepumpensystem (1) nach Anspruch 1 oder 2, wobei
der Leistungsabfall-Bestimmungsabschnitt (23) eine Tabelle zum Definieren eines Kriteriums für eine Leistungsabfall-Untergrenze in Bezug auf jede Heißwasser-Ausgabetemperatur auf den Grundlagen einer Beziehung zwischen der Temperatur des ausgegebenen Heißwassers und der Temperaturdifferenz zwischen der Kältemittelauslasstemperatur und der Wassereinlasstemperatur zu dem Zeitpunkt, wenn der Leistungsabfall des Wasser-Kältemittel-Wärmetauschers (12) auftritt, speichert.

4. Wärmepumpensystem (1) nach einem der Ansprüche 1 bis 3, wobei
das Wärmepumpensystem (1) ein Wärmepumpensystem für einen Wassererhitzer (3) ist, der ein CO2-Kältemittel verwendet.

## Revendications

1. Système de pompe à chaleur (1) comprenant un échangeur de chaleur d'eau/réfrigérant (5) ; et une partie de détermination de dégradation de performance (23) configurée pour déterminer si l'échangeur de chaleur d'eau/réfrigérant s'est dégradé du point de vue de la performance en raison de l'accumulation de tartre et qui commande un volume d'eau au moyen d'une pompe à eau (12) de sorte qu'une température d'eau chaude délivrée par le système de pompe à chaleur (1) satisfait une température cible, le système de pompe à chaleur (1) étant **caractérisé en ce que** :
la partie de détermination de dégradation de performance (23) est configurée pour déterminer la dégradation de performance due à l'accumulation de tartre dans l'échangeur de chaleur d'eau/réfrigérant (5) sur la base de la température prédéterminée de l'eau chaude délivrée et d'une différence de température entre une température de sortie de réfrigérant et une température d'entrée d'eau de l'échangeur de chaleur d'eau/réfrigérant (5).

2. Système de pompe à chaleur (1) selon la revendication 1, dans lequel :
la partie de détermination de dégradation de performance (23) a une partie d'alarme (24) qui émet une alarme d'entretien lorsque le rapport de capacité de l'échangeur de chaleur d'eau/réfrigérant (5) dépasse une plage limite.

3. Système de pompe à chaleur (1) selon la revendication 1 ou 2, dans lequel :
la partie de détermination de dégradation de performance (23) stocke un tableau pour définir un critère de la limite inférieure de dégradation de performance par rapport à chaque température de distribution d'eau chaude, sur les bases d'une relation entre la température de l'eau chaude délivrée et la différence de température entre la température de sortie de réfrigérant et la température d'entrée d'eau au moment où la dégradation de performance de l'échangeur de chaleur d'eau/réfrigérant (12) a lieu.

4. Système de pompe à chaleur (1) selon l'une quelconque des revendications 1 à 3, dans lequel :
le système de pompe à chaleur (1) est un système de pompe à chaleur pour un chauffe-eau (3) qui utilise un réfrigérant à base de CO2.
